# FASCICULE DE BREVET EUROPEEN

(11) **EP 2 870 339 B1**
(45) Date de publication et mention de la délivrance du brevet: **17.08.2016**
(21) Numéro de dépôt: 13744601.9
(22) Date de dépôt: 21.06.2013
(51) Int. Cl.: G09B 25/00, F02C 3/30, F01D 21/00

(54) **DISPOSITIF DE SIMULATION D'UNE INTRODUCTION DE PAQUETS DE GLACE DANS UN MOTEUR**
VORRICHTUNG ZUR SIMULATION DER AUFNAHME VON EISKLUMPEN DURCH EINEN MOTOR
DEVICE FOR SIMULATING THE INGESTION OF CHUNKS OF ICE BY AN ENGINE

(30) Priorité: 06.07.2012 FR 1256524
(43) Date de publication de la demande: 13.05.2015
(73) Titulaire: SNECMA, 75015 Paris (FR)
(72) Inventeur: MARECHAL, Ewen, F-77550 Moissy-Cramayel Cedex (FR); PERRIN, Jean-yves, F-77550 Moissy-Cramayel Cedex (FR)
(74) Mandataire: Regimbeau
(86) Numéro de dépôt international: PCT/FR2013/051451
(87) Numéro de publication internationale: WO 2014/006297

(56) Documents cités:
- EP-A2- 0 781 909
- WO-A1-2012/069745
- DE-A1- 19 831 425
- FR-A1- 2 944 216

## Description

L'invention concerne de manière générale la simulation de phénomènes du type paquets de glace dans l'alimentation d'un moteur, en particulier au niveau du système carburant du moteur.

Le système carburant est une partie du moteur comprenant, dans le sens de la circulation du carburant, une pompe basse pression qui reçoit du carburant en provenance d'un réservoir par l'intermédiaire d'une pompe de gavage. En sortie de la pompe basse pression, le carburant passe à travers un ou plusieurs échangeurs de chaleur et un filtre principal, puis pénètre dans une pompe haute-pression adaptée pour injecter le carburant dans la chambre de combustion par l'intermédiaire d'injecteurs appropriés et le vaporiser dans des conditions propices à sa combustion.

Dans la plupart des pays, ce système est fortement règlementé, notamment au niveau de sa résistance mécanique.

En particulier, les normes actuelles sont très exigeantes en ce qui concerne la robustesse des systèmes carburants face aux phénomènes de givrage et de formation de paquets de glace (« slush » en anglais), afin de tenter de prévenir l'obstruction par de la glace de certaines parties du système carburant tel que l'échangeur de chaleur.

Des essais de givrage ont déjà été réalisés avec un dispositif d'injection d'eau dans le moteur, comprenant des moyens adaptés pour effectuer un pré-mélange d'eau et de carburant dans une cuve, une buse d'injection, et un système de régulation adapté pour réguler les étapes d'injections et de pré-mélange. Afin de former un coulis de glace (qui est un mélange diphasique de liquide aqueux et de glace, comprenant à la fois du carburant et de l'eau sous fourme de fluide et de cristaux de glace, ou « ice slurry » en anglais), la buse d'injection comprend un turbulateur adapté pour accroître la turbulence de l'eau avant pulvérisation par la buse d'injection dans le système carburant.

Le document DE 198 31425 par exemple, décrit un tel système.

Néanmoins, au cours de ces essais, la concentration spécifiée ne dépasse pas 300 ppm (parties par millions, volumiques) afin d'assurer un mélange homogène de l'eau et du carburant, et correspond aux concentrations d'eau naturellement présentes dans le carburant. Ceci s'avère donc insuffisant pour simuler un éventuel décrochement de paquets de glace dans un système carburant. Par ailleurs, ce dispositif d'injection est bien adapté pour des temps d'injection de plusieurs de dizaines de minutes, car le système de régulation requiert quelques secondes pour démarrer l'injection et que l'eau est injectée en plusieurs fois en de très faibles quantités. Or, afin de simuler notamment le décrochement de paquets de glace pénétrant dans le système carburant, on cherche à simuler une injection de la totalité du volume d'eau dans un intervalle de temps très court, de l'ordre de quelques secondes, ce qui ne peut être obtenu avec ce dispositif d'injection d'eau. De plus, le débit dans la veine de carburant oscille pendant toute la durée de l'essai car le débit en sortie de la buse diminue fortement au moment des injections d'eau. Enfin, les zones de recirculation créées autour de la buse d'injection et la faible dimension des gouttelettes d'eau pulvérisées qui sont captées par ces zones de recirculation favorisent l'accumulation d'un dépôt de glace sur la tête de la buse d'injection tout au long de l'essai, ce qui, d'une part risque d'obstruer la buse d'injection selon le débit et la température de l'eau et du carburant, et d'autre part réduit de manière indéterminée et indéterminable la quantité d'eau pouvant finalement pénétrer dans le moteur.

Un objectif de l'invention est donc de proposer un dispositif permettant de créer une perturbation du type paquets de glace dans l'alimentation d'un moteur, qui soit capable d'injecter de l'eau dans le système carburant du moteur dans des conditions définies précises. En particulier, l'objectif de l'invention est de proposer un dispositif capable d'injecter un volume d'eau bien précis en un temps d'injection très court dans une veine de carburant ayant un débit et une température bien déterminés et stables.

Par ailleurs, l'invention a également pour objectif de proposer un dispositif d'évaluation de la résistance d'un moteur aux paquets de glace, qui soit capable de former un coulis de glace dans la veine de carburant présentant des caractéristiques structurelles définies, telle que notamment une faible taille des cristaux de glace, de préférence inférieure à 2 mm, et une texture composée de 50% d'eau et de 50% de carburant.

Pour cela, l'invention propose un dispositif de simulation d'une introduction de paquets de glace dans un moteur, comprenant :
- une cuve principale formant une cavité pour un carburant, et connectée à une entrée du moteur par une tuyauterie,
- un système d'injection, comprenant un organe d'injection disposé dans la tuyauterie,
- une cuve secondaire formant une cavité pour un carburant, connectée au système d'injection par un organe de sélection, et
- un réservoir, connecté d'une part à une réserve d'eau et d'autre part au système d'injection par l'intermédiaire de l'organe de sélection, dans lequel l'organe de sélection est adapté pour mettre sélectivement en communication le système d'injection avec la cuve secondaire ou le réservoir afin d'injecter dans le moteur une quantité d'eau déterminée.
- la cuve secondaire est connectée à un organe de mise sous pression,
- le dispositif comprend en outre un système de régulation du débit de carburant entre la cuve secondaire et l'organe de sélection,
- l'organe de sélection comprend une vanne trois-voies qui présente trois orifices, un premier orifice étant connecté au système d'injection, un deuxième orifice étant connecté à la cuve secondaire, et un troisième orifice étant connecté au réservoir,
- la réserve d'eau est soumise à une pression déterminée, et comprenant en outre un organe de remplissage adapté pour connecter le réservoir à une source de ladite pression déterminée,
- l'organe de remplissage est en outre en communication avec la cuve secondaire et est adapté pour mettre sélectivement en communication le réservoir avec la source de pression déterminée ou la cuve secondaire,
- l'organe de remplissage comprend une vanne trois-voies qui présente trois orifices, un premier orifice étant connecté à la source de pression déterminée, un deuxième orifice étant connecté à la cuve secondaire, et un troisième orifice étant connecté au réservoir,
- le dispositif comprend en outre une vanne disposée entre le réservoir et la réserve d'eau, adaptée pour permettre ou interdire la circulation d'eau entre la réserve d'eau et le réservoir,
- le dispositif comprend en outre un système d'évaluation de l'eau injectée dans la tuyauterie et arrivant à l'entrée du moteur,
- le système d'évaluation comprend un filtre disposé au niveau de l'entrée du moteur adapté pour récupérer l'eau injectée dans la tuyauterie,
- le dispositif comprend en outre un récipient de récupération de fluides,
- le système d'injection comprend une buse d'injection comprenant une tête d'injection de forme conique plane et présentant en son centre un orifice d'injection, et un turbulateur,
- dans lequel le turbulateur est placé en butée contre une paroi d'un espace interne de la tête d'injection, et est séparé de l'orifice d'injection par un canal d'injection, et
- dans lequel la paroi de l'espace interne est de forme conique.

Selon un deuxième aspect non revendiqué, l'invention propose également une buse d'injection comprenant une tête d'injection de forme conique plane et présentant en son centre un orifice d'injection, et un turbulateur.

D'autres caractéristiques optionnelles et non limitatives de la buse d'injection sont les suivantes :
- le turbulateur est placé en butée contre une paroi d'un espace interne de la tête d'injection, de manière à être séparée de l'orifice d'injection par un canal d'injection, et
- la paroi de l'espace interne est de forme conique.

D'autres caractéristiques, buts et avantages de la présente invention apparaîtront mieux à la lecture de la description détaillée qui va suivre, faite en référence aux figures annexées données à titre d'exemple non limitatif et sur lesquelles :
Les figures 1 a à 1 c représentent trois configurations d'un exemple de réalisation d'un circuit hydraulique d'un dispositif de simulation d'une introduction de paquets de glace dans un moteur conforme à l'invention ; et

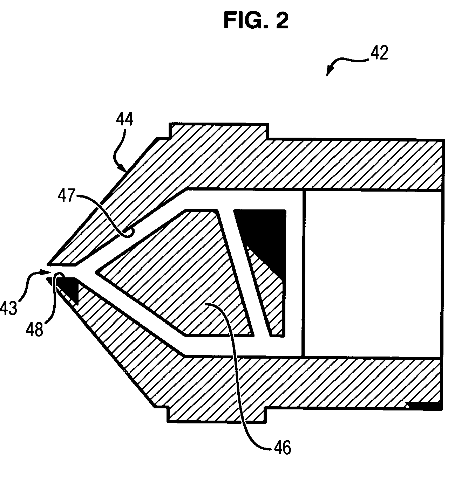

La figure 2 est un exemple de réalisation d'une buse d'injection pouvant notamment être utilisée dans un dispositif conforme à l'invention.

Un dispositif 1 de simulation d'une introduction de paquets de glace dans un moteur comprend une cuve principale 10, adaptée pour recevoir du carburant, tel que du kérosène, un moteur 2, et des canalisations reliant la cuve principale 10 à une entrée du moteur 2 (pompe).

La cuve principale 10 comprend un dispositif de refroidissement 12, adapté pour refroidir le carburant qu'elle contient à une température déterminée, comprise par exemple entre - 45°C et - 5°C. Par exemple, le dispositif de refroidissement 12 peut utiliser de l'azote sous pression comme fluide de refroidissement. La cuve principale 10 est en outre connectée à une source de pression, adaptée pour envoyer du carburant de la cuve principale 10 vers l'entrée du moteur 2 sous forme d'une veine principale de carburant à un débit déterminé, compris par exemple entre 1000 et 3500 kg/h. Le débit injecté dans les canalisations dépend toutefois du type de moteur testé et du régime moteur simulé (par exemple un régime de décollage vs. un régime de croisière pour un avion).

Le débit du carburant injecté dans le moteur 2 depuis la cuve principale 10 peut être ajusté, par exemple via la source de pression, et mesuré au moyen d'un débitmètre 16. Ici, il s'agit d'un débitmètre massique. En variante, il peut également s'agir d'un débitmètre volumique.

La cuve principale 10 est connectée à au moins un filtre 14 adapté pour filtrer l'eau éventuellement présente dans le carburant contenu dans la cuve principale 10.

Le carburant refroidi est ensuite injecté dans le moteur 2 par l'intermédiaire d'une tuyauterie 3 insérée dans les canalisations reliant la cuve principale 10 à l'entrée du moteur 2, en aval du filtre 14. Les canalisations peuvent par ailleurs être coudées, notamment avant l'entrée de la tuyauterie 3, afin de mieux simuler les canalisations des engins à moteur.

Le dispositif 1 comprend en outre, entre la cuve principale 10 et le moteur 2 :
- un système d'injection 40, comprenant un organe d'injection 42 disposé dans la tuyauterie 3,
- une cuve secondaire 20 formant une cavité pour du carburant, identique au carburant de la cuve principale, et connectée au système d'injection 40 par un organe de sélection 36, et
- un réservoir 30, connecté d'une part à une réserve d'eau déminéralisée 32 et d'autre part au système d'injection 40 par l'intermédiaire de l'organe de sélection 36.

La cuve secondaire 20 est munie d'un organe de mise sous pression 22, adapté pour mettre le carburant contenu la cuve secondaire 20 à une pression déterminée P, de l'ordre de 0 à 7 bars environ. Par ailleurs, elle est connectée au système d'injection 40 par l'intermédiaire d'un système de régulation du débit de carburant 24. Le système de régulation 24 peut notamment comprendre un régulateur de débit 24a ainsi qu'un débitmètre 24b, ici un débitmètre massique, adaptés pour réguler et mesurer le débit du carburant en provenance de la cuve secondaire entre 12 et 30 kg/h.

La cuve secondaire 20 peut être remplie à partir de la cuve principale 10 de carburant en ouvrant une vanne du type robinet 19, ou via une source de carburant séparée. Le carburant dans la cuve secondaire 20 est à température ambiante, et son volume est adapté pour permettre l'alimentation en carburant du système d'injection 40 au cours de l'essai. La cuve peut par exemple comprendre entre 40L et 60 L de carburant.

Le réservoir 30 quant à lui est adapté pour recevoir un volume de fluide déterminé, comprenant notamment le volume d'eau déterminé destiné à être injecté dans la veine principale de carburant par l'intermédiaire du système d'injection 40.

Ici, le réservoir 30 peut être rempli par un système de vases communiquant. Pour cela, le réservoir est connecté à la réserve d'eau 32 qui est à une pression donnée P0, par l'intermédiaire d'une valve de type robinet 31. Le réservoir 30 est en outre connecté d'une part à un organe de remplissage 34 adapté pour mettre sélectivement en communication le réservoir 30 avec une source de pression donnée P0 ou la cuve secondaire 20, et d'autre part à un organe de sélection 36 adapté pour mettre sélectivement en communication le système d'injection 40 avec le réservoir 30 ou la cuve secondaire 20.

La pression donnée P0 peut par exemple être la pression ambiante.

Le système d'injection 40 comprend une canne d'injection 41, connectée au niveau d'une première extrémité à l'organe de sélection 36 par l'intermédiaire de canalisations, et au niveau d'une deuxième extrémité à la buse d'injection 42. La canne d'injection 41 débouche dans la tuyauterie 3 de telle sorte que la buse d'injection 42 se trouve dans la veine principale de carburant.

La buse d'injection 42 a pour fonction de pulvériser l'eau injectée dans la veine principale de carburant.

Le diamètre de la buse d'injection 42 peut être adapté en fonction de la pressurisation de la cuve annexe 20, notamment afin de pouvoir augmenter le débit d'injection dans la veine de carburant principale.

Par ailleurs, le système d'injection 40 peut être muni d'un organe de chauffage 49, disposé par exemple entre la buse d'injection 42 et l'organe de sélection 36. Au cours des essais, l'organe de chauffage 49 est éteint et ne chauffe pas le système d'injection 40. En revanche, lorsque la canne 41 ou la buse d'injection 42 sont bouchés par de la glace, l'organe de chauffage 49 peut chauffer la canne 41 par conduction afin de faire fondre la glace emprisonnée et libérer le passage. Le débit de carburant en provenance de la cuve principale 10 étant alors de préférence coupé.

L'organe de remplissage 34 peut par exemple comprendre une vanne trois-voies, dite vanne de remplissage, disposée en partie supérieure du réservoir 30. La vanne de remplissage 34 comprend trois orifices, un premier orifice 34a étant connecté à la source de pression ambiante P0, un deuxième orifice 34b étant connecté à la sortie du système de régulation 24 de la cuve secondaire 20, et un troisième orifice 34c étant connecté dans une zone supérieure du réservoir 30. Dans cette forme de réalisation, la vanne de remplissage 34 peut donc présenter deux configurations. Dans une première configuration, le premier orifice 34a et le troisième orifice 34c sont connectés, le deuxième orifice 34b étant fermé, de sorte que le réservoir 30 est en communication avec la source de pression ambiante P0. Dans une deuxième configuration, le deuxième orifice 34b et le troisième orifice 34c sont connectés, le premier orifice 34a étant fermé, de sorte que le réservoir 30 est en communication avec la cuve secondaire 20.

L'organe de sélection 36 peut par exemple comprendre une vanne trois-voies, dite vanne de sélection, disposée en partie inférieure du réservoir 30. La vanne de sélection 36 comprend trois orifices, un premier orifice 36a étant connecté au système d'injection 40, un deuxième orifice 36b étant connecté à la sortie du système de régulation 24 de la cuve secondaire 20, et un troisième orifice 36c étant connecté dans une zone inférieure du réservoir 30. Dans cette forme de réalisation, la vanne de sélection 36 peut donc également présenter deux configurations. Dans une première configuration, le premier orifice 36a et le deuxième orifice 36b sont connectés, le troisième orifice 36c étant fermé, de sorte que la cuve secondaire 20 est en communication avec le système d'injection 40. Dans une deuxième configuration, le premier orifice 36a et le troisième orifice 36c sont connectés, le deuxième orifice 36b étant fermé, de sorte que le réservoir 30 est en communication avec le système d'injection 40.

Les configurations de la vanne de remplissage 34 et de la vanne de sélection 36 permettent donc de remplir le réservoir 30, soit avec de l'eau, soit avec du carburant, et de sélectionner le fluide injecté dans la veine principale de carburant par le système d'injection 40.

En effet, lorsque l'on ouvre la valve 31, la réserve d'eau 32 et le réservoir 30 sont en communication fluidique.

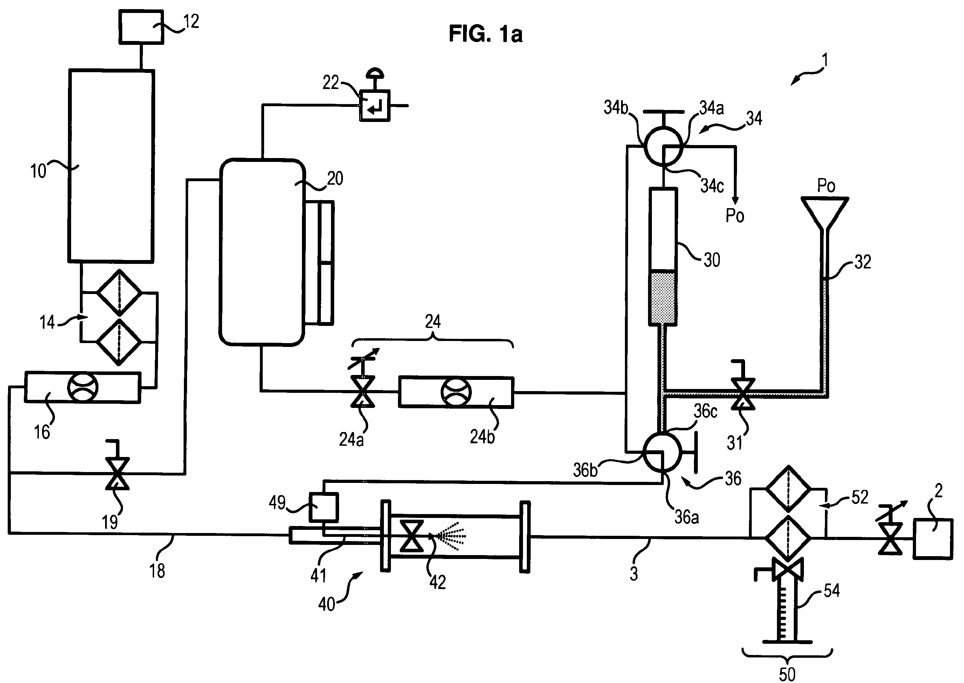

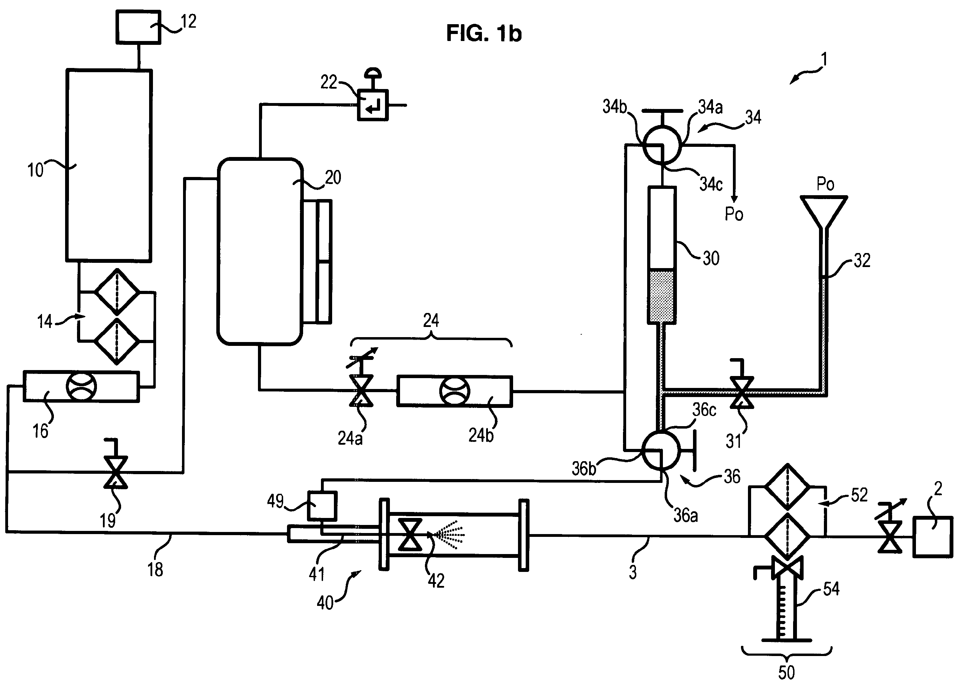

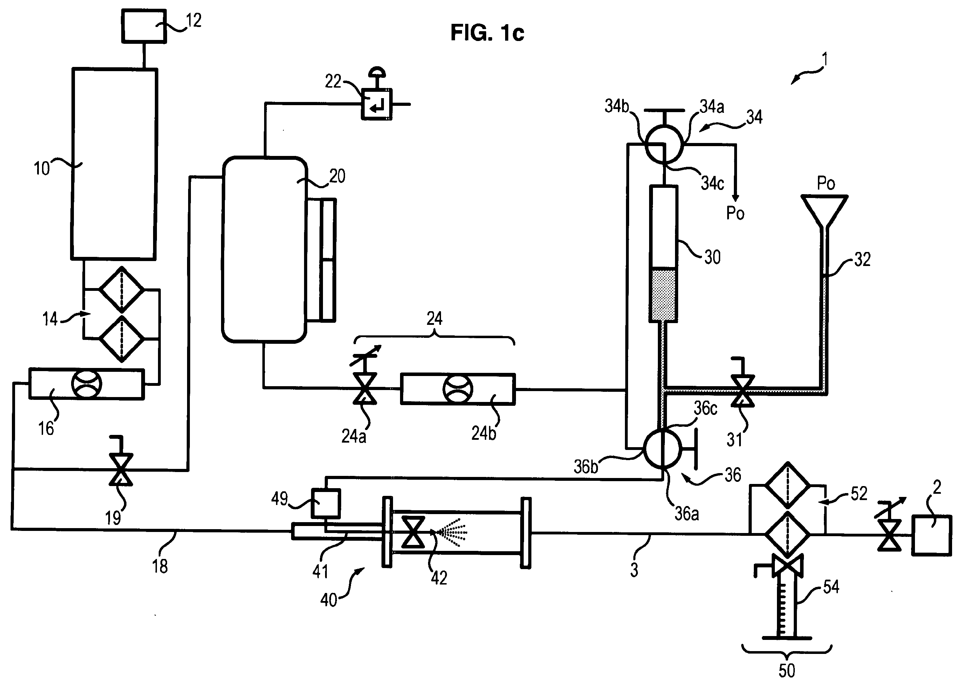

Si la vanne de remplissage 34 et la vanne de sélection sont dans la première configuration (Figure 1 a), dans laquelle le deuxième orifice 34b et le troisième orifice 36c sont fermés, le réservoir 30 communique avec la source à pression ambiante P0 et ne peut pas se vider par la vanne de sélection 36. Par conséquent, la réserve d'eau 32 et le réservoir 30 sont tous les deux en communication fluidique et à soumis à une même pression P0, de sorte que le réservoir 30 peut se remplir d'eau selon le principe des vases communicants, jusqu'à ce que son niveau soit égal au niveau de la réserve 32. Lorsque le volume d'eau déterminé dans le réservoir 30 est atteint, on peut alors fermer la valve 31.

Le niveau d'eau dans le réservoir 30 peut donc être défini de manière précise de manière à obtenir un volume d'eau déterminé, fonction de la quantité d'eau devant être injectée dans la tuyauterie 3 de la veine principale de carburant. Par exemple, le volume d'eau déterminé peut être compris entre 30 millilitres et 400 millilitres, typiquement entre 80 et 90 millilitres.

Or le volume d'eau devant être injecté dans la veine principale de carburant dépend du type de moteur testé au cours de l'essai et de la quantité d'eau devant être reçue par le moteur, mais doit en outre tenir compte des pertes éventuelles. Par exemple, il est nécessaire de tenir compte des canalisations dans lesquelles une partie du volume est stockée et nécessairement injectée avec le volume d'eau stocké dans le réservoir 30.

Comme nous le verrons de manière plus détaillée par la suite, les pertes dans le dispositif 1 sont très faibles et principalement dues à la dissolution d'une partie de l'eau dans le carburant. Par conséquent, le volume d'eau devant être injecté dans la veine principale de carburant est légèrement supérieur au volume d'eau désiré à l'entrée du moteur 2. Par exemple, pour un volume d'eau désiré à l'entrée du moteur 2 de 84 millilitres, le volume d'eau dans le réservoir 30 doit être de l'ordre de 90 à 92 millilitres.

De plus, lorsque la vanne de sélection 36 est dans sa première configuration dans laquelle le troisième orifice 36c est fermé, la cuve secondaire 20 est en communication fluidique avec le système d'injection 40. Par conséquent, pendant le remplissage du réservoir 30, non seulement la cuve principale injecte du carburant sous la forme d'une veine principale de carburant dans l'entrée du moteur 2, mais en outre le système d'injection 40 injecte dans cette vanne principale du carburant en provenance de la cuve secondaire 20.

Lors d'un essai, le carburant en provenance de la cuve principale 10 est refroidi et injecté dans la tuyauterie 3 pour former la veine principale de carburant. En parallèle de ce refroidissement ou ultérieurement, la vanne de sélection 36 est mise dans sa première configuration, de manière à mettre en communication la cuve secondaire 20 et le système d'injection, et de fermer le troisième orifice 36c, la vanne de remplissage pouvant être soit dans sa première configuration, soit dans sa deuxième configuration. Du carburant en provenance de la cuve secondaire 20 est donc injecté via le système d'injection 40 dans la veine principale de carburant.

Il est préférable de maintenir la vanne de sélection 36 dans sa deuxième configuration suffisamment longtemps pour que la température du carburant issu de la cuve principale 10 atteigne la température désirée, par exemple entre - 45°C et - 5°C, afin que les conditions des essais soient atteintes au moment de l'injection de l'eau dans la veine principale de carburant. De la sorte, au cours de cette première étape, le dispositif 1 a le temps de se stabiliser en température, en pression et en débit avant que de l'eau ne soit injectée dans la veine principale de carburant.

Si le réservoir 30 ne comprend pas encore le volume d'eau déterminé, on remplit alors le réservoir d'eau en mettant la vanne de remplissage 34 dans sa première configuration et en ouvrant la valve 31, comme indiqué plus haut.

Une fois que le dispositif 1 est stable, au cours d'une deuxième étape, on met alors la vanne de remplissage dans sa deuxième configuration, de sorte que le premier orifice 34a se ferme et que le deuxième orifice 34b s'ouvre, la vanne de sélection 36 restant dans sa première configuration (Figure 1 b). Le réservoir 30 est donc coupé de la pression ambiante P0 et connecté à la cuve secondaire 20, qui est soumise à la pression P. Néanmoins, la cuve secondaire 20 étant en communication fluidique avec le système d'injection 40, et le troisième orifice 36c étant fermé, aucun carburant ne remplit le réservoir 30 et le système d'injection 40 continue d'injecter du carburant en provenance de la cuve secondaire 20 dans la veine principale.

Le débit du carburant injecté par le système d'injection 40 peut être modulé en faisant varier la pression P de la cuve secondaire 20 grâce à l'organe de mise sous pression 22 et au système de régulation du débit 24 de la cuve secondaire 20. Nous verrons dans ce qui suit que cet ajustement du débit de carburant au cours d'une première phase d'injection permettra ensuite d'ajuster le temps d'injection de l'eau dans le moteur 2.

Puis, au cours d'une troisième étape, lorsque l'on souhaite injecter l'eau du réservoir 30 dans la veine principale de carburant, on place la vanne de sélection 36 dans sa deuxième configuration, dans laquelle le deuxième orifice 36b est fermé, la vanne de remplissage 34 restant dans sa deuxième configuration (Figure 1c). Le réservoir 30 est donc en communication fluidique avec à la fois la cuve secondaire 20 et le système d'injection 40. La cuve secondaire 20 étant sous pression (de l'ordre de 0 à 7 bars, par exemple 6 bars environ), du carburant en provenance de la cuve vient pousser l'eau dans le réservoir 30 à travers la vanne de sélection 36 jusqu'au système d'injection 40. L'eau est alors injectée dans la vanne principale de carburant.

Au cours de cette phase d'injection de l'eau, l'eau du réservoir 30 est poussée par le carburant en provenance de la cuve secondaire 20 vers la vanne de sélection 36 et le système d'injection 40. Par conséquent, à la fin de la phase d'injection de l'eau, le réservoir 30 est rempli de carburant, de sorte que le système d'injection 40 injecte dans la veine principale du carburant en provenance de la cuve secondaire 20 via le réservoir 30. Grâce au débitmètre 24, qui permet de vérifier qu'un débit continue à être injecté dans la veine principale de carburant, ce système permet donc de garantir que la totalité de l'eau comprise dans le réservoir 30 (et les canalisations) est injectée par le système d'injection 40 dans la veine principale de carburant. Le volume d'eau du réservoir étant bien déterminé, le volume d'eau injecté par le système d'injection est donc maîtrisé.

On notera en outre que lors du changement de configuration, l'injection dans la veine principale de carburant n'est pas interrompue, le basculement de la vanne de sélection 36 étant très rapide. Par ailleurs, étant donné le faible diamètre de la buse d'injection 42, le changement de densité dû à l'injection de l'eau n'est pas notable.

On peut alors remettre la vanne de sélection 36 dans sa première configuration, dans laquelle le troisième orifice 36c est fermé, afin de rebasculer l'injection sur le circuit de la cuve secondaire 20 (Figure 1 b). Le réservoir 30 est alors complètement rempli de carburant (et ne peut plus se vider par la vanne de sélection 36), tandis que le système d'injection 40 injecte du carburant en provenance de la cuve secondaire 20 dans la veine principale de carburant.

Le réservoir 30 peut ensuite être rempli en prévision d'une nouvelle injection d'eau dans la veine de carburant. Pour cela, comme on l'a vu plus haut, la vanne de remplissage 34 et la valve de sélection 36 sont remises dans leur première configuration (Figure 1 a), et la valve 31 est ouverte. Etant donné que l'eau a une densité plus importante que le carburant, l'eau en provenance de la réserve d'eau 32 repousse le carburant vers la source de pression ambiante P0 vers laquelle il est évacué, et remplit le réservoir 30 conformément au principe de vases communicants.

Le dispositif 1 est donc à nouveau prêt à injecter de l'eau dans la veine principale de carburant.

De manière optionnelle, lorsque les essais sont terminés, l'injection de carburant ou d'eau peut être arrêtée grâce à une vanne de sectionnement, qui peut par exemple être disposée entre le système d'injection 40 et la vanne de sélection 36, et qui peut être fermée afin d'éviter que la cuve secondaire 20 ne se vide dans la tuyauterie 3.

Comme nous l'avons vu plus haut, la pression de la cuve secondaire 20 et le débit du carburant en sortie du système de régulation de débit 20 de la cuve secondaire 20 sont ajustés en tenant compte de la densité de l'eau de telle sorte que le temps d'injection de l'eau de la réserve 30 soit très court. La totalité du volume d'eau peut ainsi être injecté dans un temps limité déterminé, de préférence compris entre 13 et 21 secondes.

En effet, l'eau est poussée par le carburant dans la réserve 30 en direction du système d'injection 40, de sorte que son débit en sortie de la buse d'injection 42 dépend du débit du carburant de la cuve secondaire 20. Or le débit du carburant de la cuve secondaire 20 peut être ajusté au cours de la première étape de refroidissement du carburant de la cuve principale en réglant la pression et le débit de la cuve secondaire 20 grâce au système de régulation du débit 24. Ainsi, pour une pression de la cuve secondaire 20 de l'ordre de 6 bars, un débit de l'ordre de 12 à 30 kg/h, un volume d'eau de l'ordre de 90 millilitres dans le réservoir 30, et un diamètre de la buse d'injection 42 de l'ordre de 0.7 millimètres, la durée d'injection de l'eau par la buse d'injection 42 est inférieure à 21 secondes.

Afin d'ajuster les différents paramètres de l'essai (pression de la cuve secondaire 20, débit du carburant en sortie de la cuve secondaire 20, température du carburant de la cuve principale 10, volume d'eau injecté, temps d'injection de l'eau, qualité du coulis de glace (composition, dimension des cristaux), etc.) au type de moteur qui est testé, sans endommager le moteur 2, le dispositif 1 peut en outre comprendre un système d'évaluation 50 du coulis de glace formé dans la tuyauterie 3 lors de l'injection de l'eau. Ce système d'évaluation 50 a pour fonction d'évaluer la quantité d'eau effectivement reçue par le moteur ainsi que la qualité du coulis de glace formé, afin de pouvoir ajuster la quantité d'eau à injecter et son débit.

Pour cela, le système d'évaluation 50 peut par exemple être disposé dans la tuyauterie 3, en aval de la buse d'injection 42 dans le sens de l'écoulement de la veine principale de carburant, par exemple au niveau de l'entrée du moteur 2, et comprendre au moins un filtre 52 adapté pour filtrer le coulis de glace et laisser passer le reste du carburant vers le moteur 2, et un récipient de récupération 54, adapté pour récupérer le coulis de glace séparé du reste du carburant par le filtre. De la sorte, au cours de l'étape d'ajustement des paramètres, le moteur 2 n'est pas endommagé par la présence répétée d'un coulis de glace dans le carburant. Par ailleurs, le système permet de maîtriser la quantité d'eau qui sera reçue par le moteur 2, et son temps d'injection.

Le coulis de glace accumulé dans le filtre 52 du dispositif 1 comprend approximativement 50% d'eau et 50% de carburant, et est généré par pulvérisation de l'eau par le système d'injection 40 dans la veine principale de carburant. En effet, le titre volumique de l'eau lors de l'injection est de l'ordre de 10 000 ppm, mais les particules de glace présentent une porosité de 50%, ce qui augmente le volume effectif de la phase solide.

Grâce au filtre 14 de la cuve principale 10, l'eau récupérée dans le récipient de récupération 54 ne comprend sensiblement que de l'eau en provenance du réservoir 30 d'eau, ce qui permet de déterminer la quantité d'eau « perdue » au cours de l'essai, notamment par dilution dans le carburant.

Le filtre 52 peut être indifféremment un filtre 3 microns à 25 microns. La Demanderesse s'est en effet aperçue que ces filtres étaient capables de récupérer la même quantité de coulis de glace au cours des essais.

Le récipient de récupération de fluides 54 peut être une éprouvette, qui peut être graduée afin de simplifier la mesure du volume d'eau récupéré. L'éprouvette 54 peut en outre présenter une forme globalement conique, afin de garantir la récupération de l'ensemble du coulis de glace récupérée par le filtre 52 du dispositif 1. Le volume de l'éprouvette est par ailleurs choisi de manière à être capable de recevoir la totalité du coulis de glace, qui présente un volume 8 à 10 fois supérieur au volume de l'eau injectée.

Le coulis de glace est alors réchauffé dans l'éprouvette 54 afin de liquéfier sa phase solide (cristaux) et de déterminer le volume de l'eau récupéré. Pour cela, l'éprouvette 54 peut être placée à température ambiante ou chauffée.

Une fois que l'ensemble des paramètres sont ajustés, il est alors possible de retirer le système d'évaluation 50 et de réitérer les essais en injectant le coulis de glace directement dans le moteur 2.

Afin de pulvériser l'eau dans la veine principale de carburant, il est possible d'utiliser une buse d'injection 42 conventionnelle comprenant une tête d'injection 44 de forme globalement plane et présentant en son centre un orifice d'injection 43, et un turbulateur 46, logé dans la tête d'injection 44 à proximité de l'orifice 43. Le turbulateur 46 a pour fonction d'accroître la turbulence de l'écoulement de l'eau et d'augmenter l'efficacité des échanges thermiques avant son injection dans la veine de carburant par la buse d'injection 40, afin d'obtenir au niveau de l'entrée du moteur 2 un coulis de glace de bonne qualité, c'est-à-dire composé à 50% d'eau et 50% de carburant, et dont les cristaux sont de faible diamètre, soit moins de deux millimètres environ. Néanmoins, les zones de recirculations engendrées dans la veine de carburant par le turbulateur 46 et la faible dimension des gouttelettes d'eau favorisent un dépôt de glace sur la tête 44 de la buse 42. Ce phénomène a pour conséquence de réduire la quantité d'eau effectivement reçue à l'entrée du moteur 2, et peut conduire à l'obstruction de l'orifice d'injection 43 de la buse 42 selon le débit et la température de l'eau et du carburant. La quantité d'eau effectivement reçue à l'entrée du moteur 2 est donc très difficile à quantifier, rendant les essais difficiles à exploiter.

Afin de réduire la quantité de glace formée sur la tête 44 de la buse 42, il est possible d'utiliser une buse d'injection 42 ne comprenant pas de turbulateur 46. Néanmoins, la taille des particules dans le coulis de glace est plus importante, de sorte que la qualité du coulis de glace obtenu n'est pas satisfaisante.

On propose par conséquent une nouvelle forme de réalisation de buse d'injection, permettant de réduire la formation de glace sur la tête de la buse, tout en pulvérisant suffisamment l'eau dans la veine principale de carburant afin d'obtenir un coulis de glace de bonne qualité. Pour cela, on propose de conserver le turbulateur 46 et de modifier la forme de la tête 44 de la buse d'injection 42 de manière à limiter la rupture géométrique permettant de réduire, voire d'empêcher la formation de glace sur celle-ci malgré les turbulences dans la veine de carburant. Pour cela, la buse d'injection 42 peut par exemple présenter une tête 44 de forme conique.

Par exemple, l'angle au sommet du cône de la tête 44 peut être compris entre 30° et 60°, par exemple de l'ordre de 45°.

Par ailleurs, la sortie du turbulateur 46 doit de préférence être placée à au moins un millimètre de l'orifice d'injection 43, afin de pouvoir pulvériser l'eau injectée dans la veine principale de carburant. Pour cela, le turbulateur 46 peut par exemple être placé en butée contre une paroi 47 d'un espace interne de la tête 44 de la buse, de manière à être séparé de l'orifice d'injection 43 par un canal d'injection 48 présentant une longueur définie, par exemple environ un millimètre, à travers lequel il envoie l'eau dans la veine de carburant. Par exemple, la paroi 47 de l'espace interne peut présenter une forme globalement conique, dont le sommet débouche sur le canal d'injection 48. L'angle au sommet de la paroi conique 47 de l'espace interne est en outre de préférence inférieur à l'angle au sommet du cône de la tête 44 de la buse.

Des essais ont montré qu'une buse d'injection 42 présentant une tête 44 de forme conique et un turbulateur positionné à au moins un millimètre de l'orifice d'injection 43 permettait d'obtenir un coulis de glace à fines particules et de réduire, voire d'annuler, l'adhérence de la glace sur la tête 44 de la buse 42 au cours des essais. Il est donc à présent possible de quantifier avec précision le volume d'eau à injecter dans la veine de carburant afin d'obtenir un volume d'eau déterminé en entrée du moteur, dans la mesure où l'eau injectée par la buse d'injection 42 ne vient plus s'accrocher sur les parois de la tête 44, quels que soient le débit et la température de l'eau et du carburant.

Le dispositif permet ainsi de former une veine principale de carburant à une température comprise entre - 5° et - 45° ayant un débit compris entre 1000 et 3500 kg/h dans une canalisation débouchant à l'entrée d'un moteur 2, et d'y injecter un volume défini d'eau, compris entre 30 millilitre et 400 millilitres, pendant un temps d'injection limité, par exemple compris entre 13 et 21 secondes, sans oscillation du débit d'injection. Par ailleurs, la mise en oeuvre dans le système d'injection 40 d'une buse d'injection 42 présentant une tête 44 de forme conique et un turbulateur 46 positionné à au moins un millimètre de l'orifice d'injection 43 permet de générer des gouttelettes d'eau très fines et d'obtenir un coulis de glace de bonne qualité, dont les cristaux sont de faible diamètre, soit d'un diamètre inférieur à 2 millimètres.

## Revendications

1. Dispositif (1) de simulation d'une introduction de paquets de glace dans un moteur (2), comprenant :
- une cuve principale (10) formant une cavité pour un carburant, et connectée à une entrée du moteur (2) par une tuyauterie (3),
- un système d'injection (40), comprenant un organe d'injection (42) disposé dans la tuyauterie (3),
- une cuve secondaire (20) formant une cavité pour un carburant, connectée au système d'injection (40) par un organe de sélection (36), et
- un réservoir (30), connecté d'une part à une réserve d'eau (32) et d'autre part au système d'injection (40) par l'intermédiaire de l'organe de sélection (36), dans lequel l'organe de sélection (36) est adapté pour mettre sélectivement en communication le système d'injection (40) avec la cuve secondaire (20) ou le réservoir (30) afin d'injecter dans le moteur une quantité d'eau déterminée.

2. Dispositif (1) selon la revendication 1, dans lequel la cuve secondaire (20) est connectée à un organe de mise sous pression (22).

3. Dispositif (1) selon l'une des revendications 1 ou 2, comprenant en outre un système de régulation du débit de carburant (24) entre la cuve secondaire (20) et l'organe de sélection (36).

4. Dispositif (1) selon l'une des revendications 1 à 3, dans lequel l'organe de sélection (36) comprend une vanne trois-voies qui présente trois orifices (36a, 36b, 36c), un premier orifice (36a) étant connecté au système d'injection (40), un deuxième orifice (36b) étant connecté à la cuve secondaire (20), et un troisième orifice (36c) étant connecté au réservoir (30).

5. Dispositif (1) selon l'une des revendications 1 à 4, dans lequel la réserve d'eau (32) est soumise à une pression déterminée (P0), et comprenant en outre un organe de remplissage (34) adapté pour connecter le réservoir (30) à une source de ladite pression déterminée (P0).

6. Dispositif (1) selon la revendication 5, dans lequel l'organe de remplissage (34) est en outre en communication avec la cuve secondaire (20) et est adapté pour mettre sélectivement en communication le réservoir (30) avec la source de pression déterminée (P0) ou la cuve secondaire (20).

7. Dispositif (1) selon l'une des revendications 5 ou 6, dans lequel l'organe de remplissage (34) comprend une vanne trois-voies qui présente trois orifices (34a, 34b, 34c), un premier orifice (34a) étant connecté à la source de pression déterminée (P0), un deuxième orifice (34b) étant connecté à la cuve secondaire (20), et un troisième orifice (34c) étant connecté au réservoir (30).

8. Dispositif (1) selon l'une des revendications 5 à 7, comprenant en outre une vanne (31) disposée entre le réservoir (30) et la réserve d'eau (32), adaptée pour permettre ou interdire la circulation d'eau entre la réserve d'eau (32) et le réservoir (30).

9. Dispositif (1) selon l'une des revendications 1 à 8, comprenant en outre un système d'évaluation (50) de l'eau injectée dans la tuyauterie (3) et arrivant à l'entrée du moteur (2).

10. Dispositif (1) selon la revendication 9, dans lequel le système d'évaluation (50) comprend un filtre (52) disposé au niveau de l'entrée du moteur (2) adapté pour récupérer l'eau injectée dans la tuyauterie (3).

11. Dispositif (1) selon l'une des revendications 9 ou 10, comprenant en outre un récipient de récupération de fluides (54).

12. Dispositif (1) selon l'une des revendications 1 à 11, dans lequel le système d'injection (40) comprend une buse d'injection (42) comprenant une tête d'injection (44) de forme conique plane et présentant en son centre un orifice d'injection (43), et un turbulateur (46).

13. Dispositif (1) selon la revendication 12, dans lequel dans lequel le turbulateur (44) est placé en butée contre une paroi (47) d'un espace interne de la tête d'injection (44), et est séparé de l'orifice d'injection (43) par un canal d'injection (48).

14. Dispositif (1) selon la revendication 13, dans lequel la paroi (47) de l'espace interne est de forme conique.

## Patentansprüche

1. Vorrichtung (1) zur Simulation eines Einführens von Eispaketen in einen Motor (2), die Folgendes umfasst:
- einen Hauptbehälter (10), der einen Hohlraum für einen Kraftstoff bildet und mit einem Einlass des Motors (2) durch eine Rohrleitung (3) verbunden ist,
- ein Einspritzsystem (40), das ein Einspritzorgan (42), das in der Rohrleitung (3) angeordnet ist, umfasst,
- einen Hilfsbehälter (20), der einen Hohlraum für einen Kraftstoff bildet, der an das Einspritzsystem (40) durch ein Auswahlorgan (36) angeschlossen ist, und
- einen Tank (30), der einerseits an einen Wasservorrat (32) und andererseits an das Einspritzsystem (40) anhand des Auswahlorgans (36) angeschlossen ist, wobei das Auswahlorgan (36) angepasst ist, um selektiv das Einspritzsystem (40) mit dem Hilfsbehälter (20) oder dem Tank (30) in Verbindung zu setzen, um in den Motor eine vorbestimmte Wassermenge einzuspritzen.

2. Vorrichtung (1) nach Anspruch 1, wobei der Hilfsbehälter (20) mit einem Druckbeaufschlagungsorgan (22) verbunden ist.

3. Vorrichtung (1) nach einem der Ansprüche 1 oder 2, die außerdem ein Regelsystem des Kraftstoffdurchflusses (24) zwischen dem Hilfsbehälter (20) und dem Auswahlorgan (36) umfasst.

4. Vorrichtung (1) nach einem der Ansprüche 1 bis 3, wobei das Auswahlorgan (36) ein Dreiwegeventil umfasst, das drei Öffnungen (36a, 36b, 36c) aufweist, wobei eine erste Öffnung (36a) mit dem Einspritzsystem (40) verbunden ist, eine zweite Öffnung (36b) mit dem Hilfsbehälter (20) verbunden ist, und eine dritte Öffnung (36c) mit dem Tank (30) verbunden ist.

5. Vorrichtung (1) nach einem der Ansprüche 1 bis 4, wobei die Wasserreserve (32) einem vorbestimmten Druck (P0) unterliegt und außerdem ein Füllorgan (34) umfasst, das angepasst ist, um den Tank (30) mit einer Quelle des vorbestimmten Drucks (P0) zu verbinden.

6. Vorrichtung (1) nach Anspruch 5, wobei das Füllorgan (34) außerdem mit dem Hilfsbehälter (20) in Verbindung steht und angepasst ist, um den Tank (30) selektiv mit der Quelle mit bestimmtem Druck (P0) oder mit dem Hilfsbehälter (20) in Verbindung zu setzen.

7. Vorrichtung (1) nach einem der Ansprüche 5 oder 6, wobei das Füllorgan (34) ein Dreiwegeventil umfasst, das drei Öffnungen (34a, 34b, 34c) aufweist, wobei eine erste Öffnung (34a) mit der Quelle mit bestimmtem Druck (P0) verbunden ist, eine zweite Öffnung (34b) mit dem Hilfsbehälter (20) verbunden ist, und eine dritte Öffnung (34c) mit dem Tank (30) verbunden ist.

8. Vorrichtung (1) nach einem der Ansprüche 5 bis 7, die außerdem ein Ventil (31) umfasst, das zwischen dem Tank (30) und dem Wasservorrat (32) angeordnet ist, das geeignet ist, die Wasserzirkulation zwischen dem Wasservorrat (32) und dem Tank (30) zu erlauben oder zu verbieten.

9. Vorrichtung (1) nach einem der Ansprüche 1 bis 8, die außerdem ein Beurteilungssystem (50) des in die Rohrleitung (3) eingespritzten Wassers, und das an dem Einlass des Motors (2) ankommt, umfasst.

10. Vorrichtung (1) nach Anspruch 9, wobei das Beurteilungssystem (50) ein Filter (52) umfasst, das im Bereich des Einlasses des Motors (2) angeordnet ist, das angepasst ist, um Wasser, das in die Rohrleitung (3) eingespritzt wird, aufzunehmen.

11. Vorrichtung (1) nach einem der Ansprüche 9 oder 10, die außerdem einen Auffangbehälter für Fluide (54) umfasst.

12. Vorrichtung (1) nach einem der Ansprüche 1 bis 11, wobei das Einspritzsystem (40) eine Einspritzdüse (42) umfasst, die einen Einspritzkopf (44) mit flacher Kegelform umfasst und in ihrer Mitte eine Einspritzöffnung (43) sowie einen Turbulator (46) aufweist.

13. Vorrichtung (1) nach Anspruch 12, wobei der Turbulator (44) im Anschlag gegen eine Wand (47) eines Innenraums des Einspritzkopfs (44) platziert und von der Einspritzöffnung (43) durch einen Einspritzkanal (48) getrennt ist.

14. Vorrichtung (1) nach Anspruch 13, wobei die Wand (47) des Innenraums Kegelform hat.

## Claims

1. Device (1) for simulating an ingestion of chunks of ice by an engine (2), comprising:
- a main tank (10) forming a cavity for a fuel, and connected to an inlet of the engine (2) by a pipe (3),
- an injection system (40), comprising an injector (42) arranged in the pipe (3),
- a secondary tank (20) forming a cavity for a fuel, connected to the injection system (40) by a selector (36), and
- a reservoir (30), connected on the one hand to a water reserve (32) and on the other hand to the injection system (40) by the intermediary of the selector (36), wherein the selector (36) is designed to place the injection system (40) selectively in communication with the secondary tank (20) or the reservoir (30) in order to inject a determined quantity of water into the engine.

2. Device (1) according to claim 1, wherein the secondary tank (20) is connected to a pressurising member (22).

3. Device (1) according to one of claims 1 or 2, further comprising a system for regulating the flow rate of fuel (24) between the secondary tank (20) and the selector (36).

4. Device (1) according to one of claims 1 to 3, wherein the selector (36) comprises a three-way valve that has three orifices (36a, 36b, 36c), a first orifice (36a) being connected to the injection system (40), a second orifice (36b) being connected to the secondary tank (20), and a third orifice (36c) being connected to the reservoir (30).

5. Device (1) according to one of claims 1 to 4, wherein the water reserve (32) is subjected to a determined pressure (P0), and further comprising a filling member (34) designed to connect the reservoir (30) to a source of the said determined pressure (P0).

6. Device (1) according to claim 5, wherein the filling member (34) is furthermore in communication with the secondary tank (20) and is designed to place the reservoir (30) selectively in communication with the source of determined pressure (P0) or the secondary tank (20).

7. Device (1) according to one of claims 5 or 6, wherein the filling member (34) comprises a three-way valve which has three orifices (34a, 34b, 34c), a first orifice (34a) being connected to the source of determined pressure (P0), a second orifice (34b) being connected to the secondary tank (20), and a third orifice (34c) being connected to the reservoir (30).

8. Device (1) according to one of claims 5 to 7, further comprising a valve (31) arranged between the reservoir (30) and the water reserve (32), adapted to allow or prohibit the circulation of water between the water reserve (32) and the reservoir (30).

9. Device (1) according to one of claims 1 to 8, further comprising a system for evaluating (50) the water injected into the pipe (3) and arriving at the inlet of the engine (2).

10. Device (1) according to claim 9, wherein the evaluation system (50) comprises a filter (52) arranged on the inlet of the engine (2) designed to recover the water injected into the pipe (3).

11. Device (1) according to one of claims 9 or 10, further comprising a container for recovering fluids (54).

12. Device (1) according to one of claims 1 to 11, wherein the injection system (40) comprises an injection nozzle (42) comprising an injection head (44) with a flat tapered shape and having at its centre an injection orifice (43), and a turbulator (46).

13. Device (1) according to claim 12, wherein the turbulator (44) is placed in abutment against a wall (47) of an inner space of the injection head (44), and is separated from the injection orifice (43) by an injection channel (48).

14. Device (1) according to claim 13, wherein the wall (47) of the inner space is of tapered shape.
